# EUROPÄISCHE PATENTSCHRIFT

(11) **EP 3 085 796 B1**
(45) Veröffentlichungstag und Bekanntmachung des Hinweises auf die Patenterteilung: **19.07.2017**
(21) Anmeldenummer: 15164448.1
(22) Anmeldetag: 21.04.2015
(51) Int. Cl.: C22B 5/12, C22B 7/00, C22B 11/00

(54) **VERFAHREN ZUM AUFSCHLUSS EINES METALLISCHES IRIDIUM UND/ODER IRIDIUMOXID UMFASSENDEN GEMISCHS VON FESTSTOFFPARTIKELN**
EXTRACTION METHOD FOR A METALLIC, IRIDIUM AND/OR IRIDIUM OXIDE COMPRISING MIXTURE OF SOLID PARTICLES
PROCEDE D'EXTRACTION D'UN MÉLANGE DE PARTICULES SOLIDES CONTENANT DE L'IRIDIUM MÉTALLIQUE ET/OU OXYDE D'IRIDIUM

(43) Veröffentlichungstag der Anmeldung: 26.10.2016
(73) Patentinhaber: Heraeus Deutschland GmbH & Co. KG, 63450 Hanau (DE)
(72) Erfinder: Stettner, Martin, 63674 Altenstadt (DE); Günther, Magdalena, 63599 Biebergemünd (DE); Fuchs Alameda, Stefanie, 63599 Biebergemünd (DE); Thiel, Vasco, 63755 Alzenau (DE); Voß, Steffen, 63694 Limeshain (DE)
(74) Vertreter: Heraeus IP

(56) Entgegenhaltungen:
- EP-A2- 2 090 669
- JP-A- 2009 235 513
- KR-A- 20100 131 238
- US-A- 4 002 470
- US-B1- 6 458 183

## Beschreibung

Die vorliegende Erfindung betrifft ein Verfahren zum Aufschluss eines metallisches Iridium und/oder Iridiumoxid umfassenden Gemischs von Feststoffpartikeln. Ziel des Verfahrens ist der vollständige Aufschluss des Iridiums und die Gewinnung einer wässrigen Lösung, die eine weitere Aufreinigung und Gewinnung von Iridium oder Iridiumverbindungen erlaubt.

Iridiumoxid bedeutet hier und in der weiteren Folge Ir₂O₃ und/oder IrO₂.

Schwierig aufzuschliessende Gemische anorganischer Feststoffpartikel, welche metallisches Iridium und/oder Iridiumoxid bei einem Gesamtiridiumanteil von 20 bis 99 Gew.-% (Gewichts-%) im Gemisch enthalten, können verschiedenen Quellen entstammen. Es kann sich bei solchen Gemischen beispielsweise um Erzkonzentrate aus der Erzaufbereitung oder um Iridium enthaltende Rückstände aus Edelmetallaufbereitungsprozessen handeln. Bei der Anmelderin werden solche Gemische als "Iridiumfeine" bezeichnet, ein Begriff, der in der weiteren Folge für derartige Gemische verwendet wird.

Im Rahmen der vorliegenden Erfindung handelt es sich bei Iridiumfeine insbesondere um solche Gemische von Feststoffpartikeln, die aus
(A) 0 bis 99 Gew.-% metallischen Iridiums,
(B) 0 bis 20 Gew.-% mindestens eines von Iridium verschiedenen, elementar vorliegenden Metalls ausgewählt aus der Gruppe der Metalle der Ordnungszahlen 13, 21-30, 39-50, 72-76 und 78-82,
(C) 0 bis 99 Gew.-% Iridiumoxid,
(D) 0 bis 70 Gew.-% mindestens eines von Iridiumoxid verschiedenen Metalloxids,
(E) 0 bis 30 Gew.-% mindestens einer von (A) bis (D) verschiedenen anorganischen Substanz, und
(F) 0 bis 1 Gew.-% organischer Substanz
bestehen, wobei die Summe der Gew.-% der Komponenten (A) bis (F) 100 Gew.-% und der Gesamtiridiumgehalt der Iridiumfeine 20 bis 99 Gew.-% beträgt.

Bei den Metalloxiden der Komponente (D) handelt es sich um Oxide der Metalle der Komponente (B), Alkalimetalloxide und/oder Erdalkalimetalloxide; um Missverständnisse auszuschliessen: Peroxide oder Superoxide dieser Metalle sind ausgeschlossen. Die Metalle der Metalloxide der Komponente (D) weisen im allgemeinen Oxidationsstufen im Bereich von +1 bis +4 auf. Die Metalloxide der Komponente (D) sind Feststoffe.

Die mindestens eine von (A) bis (D) verschiedene anorganische Substanz der Komponente (E) umfasst insbesondere weder (i) sauer reagierende Substanzen wie beispielsweise Säuren, saure Salze, Säureanhydride oder dergleichen, noch (ii) mittels Natriumperoxid oder Natriumnitrat unter Feuererscheinung oder gar Explosion oxidierbare Substanzen wie beispielsweise anorganische Reduktionsmittel. Die mindestens eine von (A) bis (D) verschiedene anorganische Substanz der Komponente (E) kann beispielsweise aus der aus (i) festen Nichtmetalloxiden wie beispielsweise Siliziumdioxid, (ii) einfachen oder Komplexsalzen wie beispielsweise Silikaten, Sulfiden, Phosphiden, Sulfiten, Phosphiten, Sulfaten, Phosphaten und Metallaten, (iii) von Oxiden, einfachen Salzen und Komplexsalzen der Komponente (ii) verschiedenen Oxo-, Schwefel- und/oder Phosphorverbindungen eines oder mehrerer Metalle der Ordnungszahlen 13, 21-30, 39-50, 72-82 und (iv) Kohlenstoff, beispielsweise Russ oder Graphit, bestehenden Gruppe ausgewählt sein. Es handelt sich bei den anorganischen Substanzen der Komponente (E) im wesentlichen um Feststoffe, d.h. die Komponente (E) besteht zu 95 bis 100 Gew.-%, bevorzugt zu 99 bis 100 Gew.-%, insbesondere vollständig aus Feststoffen.

Bevorzugt umfasst die Iridiumfeine keine Komponente (F). Es kann jedoch sein, dass sie > 0 bis 1 Gew.-% Komponente (F) enthält, dann jedoch im allgemeinen technisch bedingt und insofern unvermeidbar.

Visuell betrachtet sind die Iridiumfeine-Gemische praktisch homogen, nicht zuletzt als Folge der absoluten Korngrößen der sie ausmachenden Feststoffpartikel, die im Bereich von beispielsweise 50 bis 200 µm liegen. Die einzelnen oder einzelne Feststoffpartikel können dabei eine oder mehrere der Komponenten (A) bis (F) umfassen.

Bekannt ist die Aufarbeitung von Iridiumfeine zwecks Aufschluss des darin enthaltenen Iridiums mittels Trockenchlorierung oder alkalisch oxidativer Schmelze mit KOH. Diese Prozesse sind zeitaufwendig und teuer; außerdem kann Kalium bei der anschliessenden weiteren Edelmetallscheidung stören. Aus US 4 002 470 ist ein Verfahren für den alkalischen Schmelzaufschluss von Ruthenium mit NaOH/Na₂O₂ bekannt.

Ein alkalisch oxidativer Aufschluss von Iridiumfeine mittels einer NaOH-Schmelze gelingt nicht bzw. nur unvollständig.

Aus GB2413323A ist der Aufschluss von metallischem Iridium durch Sintern mit Bariumperoxid bei hoher Temperatur bekannt.

Die Anmelderin hat erfolgreich versucht, Iridiumfeine mittels einer NaOH/Na₂O₂-Schmelze alkalisch oxidativ aufzuschliessen. Jedoch stellen solche NaOH/Na₂O₂-Schmelzen sehr aggressive, selbst Stähle und mithin übliche Apparaturen angreifende und daher ungünstige Medien dar.

Wie sich herausgestellt hat, können die vorbeschriebenen Nachteile durch das in der weiteren Folge erläuterte Aufschlussverfahren für Iridiumfeine vermieden werden.

Die vorliegende Erfindung besteht in einem Verfahren zum Aufschluss von Iridiumfeine, umfassend die Schritte:
(a) alkalisch oxidierendes Aufschliessen von 1 Gewichtsteil Iridiumfeine mit 3 bis 20 Gewichtsteilen einer Kombination umfassend 40 bis 70 Gewichtsanteile Natriumhydroxid, 15 bis 30 Gewichtsanteile Natriumnitrat und 10 bis 40 Gewichtsanteile Natriumperoxid in der Schmelze, wobei die Summe der Gewichtsanteile 100 Gewichtsanteile beträgt,
(b) Abkühlen des in Schritt (a) gebildeten Aufschlussmaterials auf 20 bis 70 °C,
(c) Lösen der säurelöslichen Anteile des abgekühlten Aufschlussmaterials in Wasser/Halogenwasserstoffsäure bis zum Erhalt einer sauren wässrigen Lösung mit einem pH-Wert im Bereich von -1 bis +1, und
(d) Verkochen der in Schritt (c) erhaltenen sauren wässrigen Lösung bis zum Ende der Bildung nitroser Gase,
wobei vor oder nach Schritt (d) bei Bedarf ein Schritt (e) des Abtrennens unlöslicher Bestandteile aus der sauren wässrigen Lösung erfolgen kann.

Die in der Beschreibung und den Ansprüchen verwendeten Begriffe "Halogen", "Halogenwasserstoffsäure" bzw. "halogenwasserstoffsauer" bedeuten Brom und/oder Chlor, bevorzugt Chlor, Bromwasserstoffsäure und/oder Salzsäure, bevorzugt Salzsäure bzw. bromwasserstoffsauer und/oder salzsauer, bevorzugt salzsauer.

In Schritt (a) des erfindungsgemäßen Verfahrens wird 1 Gewichtsteil Iridiumfeine mit 3 bis 20 Gewichtsteilen, bevorzugt 3 bis 10 Gewichtsteilen einer Kombination umfassend 40 bis 70 Gewichtsanteile Natriumhydroxid, 15 bis 30 Gewichtsanteile Natriumnitrat und 10 bis 40 Gewichtsanteile Natriumperoxid in der Schmelze alkalisch oxidierend aufgeschlossen, wobei die Summe der Gewichtsanteile 100 Gewichtsanteile beträgt. Bevorzugt umfasst die Kombination 45 bis 60 Gewichtsanteile Natriumhydroxid, 15 bis 25 Gewichtsanteile Natriumnitrat und 15 bis 25 Gewichtsanteile Natriumperoxid, wobei die Summe der Gewichtsanteile 100 Gewichtsanteile beträgt. Besonders bevorzugt umfasst die Kombination neben Natriumhydroxid, Natriumnitrat und Natriumperoxid keine weiteren Substanzen.

Grundsätzlich besteht für die Zugabereihenfolge von Iridiumfeine, Natriumhydroxid, Natriumnitrat und Natriumperoxid innerhalb des Verfahrensschritts (a) keine Beschränkung, außer dass zweckmäßigerweise Natriumhydroxid vorgelegt und das Natriumperoxid zuletzt, also nach Zugabe der Iridiumfeine, zugesetzt wird. Zweckmäßig wird also zunächst eine Natriumhydroxid-Schmelze oder eine Schmelze aus Natriumhydroxid und einem Anteil des, beispielsweise 20 bis 60 Gew.-% des Natriumnitrats bereitet.

Dabei kann die Iridiumfeine jederzeit zugegeben werden, beispielsweise vor, während und/oder nach vollständigem Aufschmelzen des Natriumhydroxids bzw. des Natriumhydroxids/Natriumnitrats; mit anderen Worten, die Zugabe der Iridiumfeine kann dabei auf einmal oder in mehreren Teilmengen erfolgen. Die Temperatur in der Schmelze liegt in bzw. bis zu diesem Stadium des Verfahrensschritts (a) im Bereich von beispielsweise 400 bis 450 °C. Im Anschluss werden das Natriumnitrat oder der noch nicht zugegebene Anteil des Natriumnitrats sowie das Natriumperoxid unter Beachtung der dabei üblicherweise erfolgenden Temperatursteigerung zugegeben; bevorzugt wird dabei eine Temperatur in der Schmelze von 580 °C nicht überschritten. Nach vollständiger Zugabe aller Komponenten wird die so erhaltene Schmelze auf eine Temperatur im Bereich von beispielsweise 600 bis 660 °C gebracht und dort für beispielsweise 2 bis 5 Stunden gehalten, bevorzugt unter Durchmischen, beispielsweise Rühren.

In Verfahrensschritt (b) des erfindungsgemäßen Verfahrens wird das in Schritt (a) gebildete Aufschlussmaterial auf 20 bis 70 °C abgekühlt, wobei es erstarrt. Es kann zweckmäßig sein, das Aufschlussmaterial noch als Schmelze in ein oder mehrere Behältnisse zu verbringen, in dem/denen der Folgeverfahrensschritt (c) stattfindet, und das Abkühlen darin erfolgen zu lassen. Der Abkühlvorgang erfolgt üblicherweise passiv ohne unterstützende Kühlung.

In Verfahrensschritt (c) des erfindungsgemäßen Verfahrens werden die säurelöslichen Anteile des auf 20 bis 70 °C abgekühlten Aufschlussmaterials in Wasser/Halogenwasserstoffsäure bis zum Erhalt einer sauren wässrigen Lösung mit einem pH-Wert im Bereich von -1 bis +1 gelöst. Die pH-Wert-Bestimmung stellt keine besonderen Anforderungen und kann mit einem üblichen pH-Meter erfolgen.

Zweckmäßig kann beispielsweise so vorgegangen werden, dass man das Aufschlussmaterial zunächst in Wasser aufnimmt bzw. Wasser zum Aufschlussmaterial gibt und danach Halogenwasserstoffsäure, insbesondere starke Halogenwasserstoffsäure, z.B. 8N- bis 12N-Halogenwasserstoffsäure bis zum Erhalt einer sauren wässrigen Lösung mit einem pH-Wert im Bereich von -1 bis +1 zugibt.

Beispielsweise kann ein während Verfahrensschritt (c) zur Anwendung kommendes Gewichtsverhältnis von Aufschlussmaterial : Wasser: 8N- bis 12N-Halogenwasserstoffsäure im Bereich von 1 : 2-5 : 3-10 liegen. Zweckmäßigerweise wird das Aufschlussmaterial in der wässrigen Phase suspendiert, beispielsweise durch Rühren.

Die saure wässrige Lösung oder, genauer, die von unlöslichen Bestandteilen an sich freie, schon befreite oder noch zu befreiende saure wässrige Lösung wird in Verfahrensschritt (d) des erfindungsgemäßen Verfahrens bis zum Ende der Bildung nitroser Gase (NOₓ) verkocht, also bei Siedetemperatur. Das Ende der Bildung nitroser Gase kann visuell und, falls gewünscht, ergänzend analytisch verfolgt werden, beispielsweise durch Bestimmung des Nitrit- und Nitrat-Gehaltes in der wässrigen Lösung. Während der Verkochung, die neben der Entfernung von Nitrit bzw. Nitrat als nitrose Gase auch einer Aufkonzentrierung dient, kann Wasser und/oder Halogenwasserstoffsäure zugesetzt werden, um den pH-Wert im Bereich von -1 bis +1 zu halten. Der Verkochungsvorgang dauert üblicherweise 5 bis 15 Stunden.

Nach Beendigung von Verfahrensschritt (d) erhält man eine saure wässrige Lösung, die das aufgeschlossene Iridium in gelöster Form, vermutlich als Halogenid und/oder Halogenoiridat, enthält.

Wie schon angedeutet, kann das erfindungsgemäße Verfahren bei Bedarf einen Verfahrensschritt (e) umfassen. Sollte das Aufschlussmaterial also geringe Anteile von in der sauren wässrigen Lösung unlöslichen Bestandteilen enthalten bzw. sollte die in Verfahrensschritt (c) erhaltene saure wässrige Lösung geringe Anteile von unlöslichen Bestandteilen enthalten, beispielsweise in einer auf das in den Verfahrensschritten (a) bzw. (b) erhaltene Aufschlussmaterial bezogenen Größenordnung von bis zu 5 Gew.-%, so können diese Bestandteile in diesem optionalen Verfahrensschritt (e) abgetrennt werden. Dabei können übliche dem Fachmann bekannte Fest-Flüssig-Trennverfahren eingesetzt werden, beispielsweise Dekantieren, Abhebern, Abfiltrieren oder geeignete Kombinationen solcher Trennverfahren. Verfahrensschritt (e) kann vor oder nach Verfahrensschritt (d) erfolgen.

Das erfindungsgemäße Verfahren zeichnet sich aus durch eine hohe Iridium-Wiederfindungsrate in der in Verfahrensschritt (d) erhaltenen sauren wässrigen Lösung. Beispielsweise liegt die Wiederfindungsrate bei 97-100 %, bezogen auf das in der in Verfahrensschritt (a) eingesetzten Iridiumfeine enthaltene Iridium. Mit anderen Worten, das erfindungsgemäße Verfahren erlaubt einen vollständigen oder zumindest nahezu vollständigen Aufschluss von Iridiumfeine im Hinblick auf die Überführung darin enthaltenen Iridiums in eine wässrig gelöste Form. Die in Verfahrensschritt (d) erhaltene saure wässrige Lösung erlaubt eine weitere Aufreinigung und Gewinnung von Iridium oder Iridiumverbindungen mittels dem Fachmann bekannter üblicher Verfahren.

### Beispiele

### Beispiel 1:

In einem Schmelztiegel wurden 35 kg Natriumnitrat sowie 200 kg Natriumhydroxid vorgelegt und bei 410 °C aufgeschmolzen. Unter Rühren wurden über einen Zeitraum von 1,5 Stunden weitere 35 kg Natriumnitrat sowie 70 kg einer Iridiumfeine (Zusammensetzung gemäß Röntgenfluoreszenzanalyse (RFA), jeweils in Gew.-%: 9 Iridium, 3,4 Aluminium, 7 Silizium, 1,8 Calcium, 1,8 Chrom, 15 Eisen, 11 Kupfer, 9 Zink, 3,2 Rhodium, 1,5 Platin) zugegeben. Anschließend wurden 70 kg Natriumperoxid portionsweise zugegeben, wobei die Temperatur der Schmelze anstieg. Nach der Zugabe des Natriumperoxids wurde noch 1 h nachgerührt. Danach wurde die Temperatur auf 610 °C erhöht und über einen Zeitraum von 5 Stunden gehalten. Anschliessend wurde die Schmelze in zwei Schmelzwannen ausgegossen. Nach dem Abkühlen auf 20 °C wurde die erstarrte Schmelze mit insgesamt 1000 I Wasser versetzt und 4 Stunden aufsuspendiert. Die so erhaltene stark alkalische Suspension wurde in einem Kessel mit 1400 I 10N-Salzsäure unter Mantelkühlung auf einen pH-Wert von - 0,5 eingestellt. Dabei stieg die Temperatur auf 70 °C an. Die so erhaltene Lösung wurde über einen Zeitraum von 12 Stunden unter Freisetzung nitroser Gase verkocht, wobei zur Einhaltung des pH-Wertes der Lösung von -0,5 insgesamt weitere 900 I 10N-Salzsäure zugesetzt wurden. Danach wurde die Lösung filtriert.

Die Wiederfindungsrate für Iridium betrug 97 % (errechnet aus dem mittels induktiv gekoppelter Plasmaemission (ICP) bestimmten Iridiumgehalt der sauren Lösung unter Bezug auf die eingesetzte Iridiumfeine mit 9 Gew.-% Iridiumanteil).

### Beispiel 2:

In einem Schmelztiegel wurden 35 kg Natriumnitrat sowie 200 kg Natriumhydroxid vorgelegt und bei 410 °C aufgeschmolzen. Unter Rühren wurden über einen Zeitraum von 1,5 Stunden weitere 35 kg Natriumnitrat sowie 70 kg einer Iridiumfeine (Zusammensetzung gemäß Röntgenfluoreszenzanalyse (RFA), jeweils in Gew.-%: 53 Iridium, 2,8 Aluminium, 6,1 Platin, 2,6 Eisen, 3,3 Silizium, 0,8 Chrom, 0,3 Nickel) zugegeben. Anschließend wurden 80 kg Natriumperoxid portionsweise zugegeben, wobei die Temperatur der Schmelze anstieg. Nach der Zugabe des Natriumperoxids wurde noch 1 h nachgerührt. Danach wurde die Temperatur auf 610 °C erhöht und über einen Zeitraum von 5 Stunden gehalten. Anschliessend wurde die Schmelze in zwei Schmelzwannen ausgegossen. Nach dem Abkühlen auf 20 °C wurde die erstarrte Schmelze mit insgesamt 1000 I Wasser versetzt und 4 Stunden aufsuspendiert. Die so erhaltene stark alkalische Suspension wurde in einem Kessel mit 1400 I 10N-Salzsäure unter Mantelkühlung auf einen pH-Wert von -0,5 eingestellt. Dabei stieg die Temperatur auf 70 °C an. Die so erhaltene Lösung wurde über einen Zeitraum von 12 Stunden unter Freisetzung nitroser Gase verkocht, wobei zur Einhaltung des pH-Wertes der Lösung von -0,5 insgesamt weitere 900 I 10N-Salzsäure zugesetzt wurden. Danach wurde die Lösung filtriert. Die Wiederfindungsrate für Iridium betrug 99 % (errechnet aus dem mittels induktiv gekoppelter Plasmaemission (ICP) bestimmten Iridiumgehalt der sauren Lösung unter Bezug auf die eingesetzte Iridiumfeine mit 53 Gew.-% Iridiumanteil).

## Patentansprüche

1. Verfahren zum Aufschluss von Iridiumfeine, umfassend die Schritte:
(a) alkalisch oxidierendes Aufschliessen von 1 Gewichtsteil Iridiumfeine mit 3 bis 20 Gewichtsteilen einer Kombination umfassend 40 bis 70 Gewichtsanteile Natriumhydroxid, 15 bis 30 Gewichtsanteile Natriumnitrat und 10 bis 40 Gewichtsanteile Natriumperoxid in der Schmelze, wobei die Summe der Gewichtsanteile 100 Gewichtsanteile beträgt,
(b) Abkühlen des in Schritt (a) gebildeten Aufschlussmaterials auf 20 bis 70 °C,
(c) Lösen der säurelöslichen Anteile des abgekühlten Aufschlussmaterials in Wasser/Halogenwasserstoffsäure bis zum Erhalt einer sauren wässrigen Lösung mit einem pH-Wert im Bereich von -1 bis +1, und
(d) Verkochen der in Schritt (c) erhaltenen sauren wässrigen Lösung bis zum Ende der Bildung nitroser Gase,
wobei vor oder nach Schritt (d) bei Bedarf ein Schritt (e) des Abtrennens unlöslicher Bestandteile aus der sauren wässrigen Lösung erfolgen kann.

2. Verfahren nach Anspruch 1,
wobei die Kombination 45 bis 60 Gewichtsanteile Natriumhydroxid, 15 bis 25 Gewichtsanteile Natriumnitrat und 15 bis 25 Gewichtsanteile Natriumperoxid umfasst.

3. Verfahren nach Anspruch 1 oder 2,
wobei die Kombination neben Natriumhydroxid, Natriumnitrat und Natriumperoxid keine weiteren Substanzen umfasst.

4. Verfahren nach einem der vorhergehenden Ansprüche,
wobei Natriumhydroxid vorgelegt und das Natriumperoxid nach Zugabe der Iridiumfeine zugesetzt wird.

5. Verfahren nach einem der vorhergehenden Ansprüche,
wobei nach vollständiger Zugabe aller Komponenten die so erhaltene Schmelze auf eine Temperatur im Bereich von 600 bis 660 °C gebracht und dort für 2 bis 5 Stunden gehalten wird.

6. Verfahren nach einem der vorhergehenden Ansprüche,
wobei ein während Verfahrensschritt (c) zur Anwendung kommendes Gewichtsverhältnis von Aufschlussmaterial : Wasser: 8N- bis 12N-Halogenwasserstoffsäure im Bereich von 1 : 2-5 : 3-10 liegt.

7. Verfahren nach einem der vorhergehenden Ansprüche,
wobei die Iridiumfeine ein Gemisch anorganischer Feststoffpartikel ist, welches metallisches Iridium und/oder Iridiumoxid bei einem Gesamtiridiumanteil von 20 bis 99 Gew.-% im Gemisch enthält.

8. Verfahren nach einem der Ansprüche 1 bis 7,
wobei die Iridiumfeine ein Gemisch von Feststoffpartikeln ist, das aus
(A) 0 bis 99 Gew.-% metallischen Iridiums,
(B) 0 bis 20 Gew.-% mindestens eines von Iridium verschiedenen, elementar vorliegenden Metalls ausgewählt aus der Gruppe der Metalle der Ordnungszahlen 13, 21-30, 39-50, 72-76 und 78-82,
(C) 0 bis 99 Gew.-% Iridiumoxid,
(D) 0 bis 70 Gew.-% mindestens eines von Iridiumoxid verschiedenen Metalloxids,
(E) 0 bis 30 Gew.-% mindestens einer von (A) bis (D) verschiedenen anorganischen Substanz, und
(F) 0 bis 1 Gew.-% organischer Substanz
besteht,
wobei die Summe der Gew.-% der Komponenten (A) bis (F) 100 Gew.-% und der Gesamtiridiumgehalt der Iridiumfeine 20 bis 99 Gew.-% beträgt.

9. Verfahren nach Anspruch 8,
wobei das mindestens eine Metalloxid der Komponente (D) ausgewählt ist aus der aus Oxiden der Metalle der Komponente (B), Alkalimetalloxiden und Erdalkalimetalloxiden bestehenden Gruppe.

10. Verfahren nach Anspruch 8 oder 9,
wobei die mindestens eine anorganische Substanz der Komponente (E) weder (i) sauer reagierende Substanzen, noch (ii) mittels Natriumperoxid oder Natriumnitrat unter Feuererscheinung oder gar Explosion oxidierbare Substanzen umfasst.

11. Verfahren nach Anspruch 8, 9 oder 10,
wobei die mindestens eine anorganische Substanz der Komponente (E) aus der aus (i) festen Nichtmetalloxiden, (ii) einfachen oder Komplexsalzen, (iii) von Oxiden, einfachen Salzen und Komplexsalzen der Komponente (ii) verschiedenen Oxo-, Schwefel- und/oder Phosphorverbindungen eines oder mehrerer Metalle der Ordnungszahlen 13, 21-30, 39-50, 72-82 und (iv) Kohlenstoff bestehenden Gruppe ausgewählt ist.

12. Verfahren nach einem der Ansprüche 7 bis 11,
wobei die absoluten Korngrößen der Feststoffpartikel der Iridiumfeine im Bereich von 50 bis 200 µm liegen.

## Claims

1. Process for digestion of iridium fines, comprising the steps of:
(a) alkaline oxidative digestion of 1 part by weight iridium fines and 3 to 20 parts by weight of a combination comprising 40 to 70 parts by weight sodium hydroxide, 15 to 30 parts by weight sodium nitrate, and 10 to 40 parts by weight sodium peroxide in the melt, whereby the sum of the weight fractions adds up to 100 parts by weight;
(b) cooling the digestion material formed in step (a) to 20 to 70 °C;
(c) dissolving the acid-soluble fractions of the cooled digestion material in water/halogen hydracid until an acidic aqueous solution with a pH value in the range of -1 to +1 is obtained; and
(d) boiling the acidic aqueous solution obtained in step (c) until the formation of nitrous gases is completed;
whereby a step (e) of separating insoluble ingredients from the acidic aqueous solution can take place before or after step (d), if needed.

2. Process according to claim 1,
whereby the combination comprises 45 to 60 parts by weight sodium hydroxide, 15 to 25 parts by weight sodium nitrate, and 15 to 25 parts by weight sodium peroxide.

3. Process according to claim 1 or 2,
whereby the combination comprises no further substances aside from sodium hydroxide, sodium nitrate, and sodium peroxide.

4. Process according to any one of the preceding claims,
whereby the sodium hydroxide is used first and the sodium peroxide is added after the addition of the iridium fines.

5. Process according to any one of the preceding claims,
whereby, after all components have been added completely, the melt thus obtained is made to have a temperature in the range of 600 to 660°C and is maintained at this level for 2 to 5 hours.

6. Process according to any one of the preceding claims,
whereby a weight ratio of digestion material : water: 8N to 12N halogen hydracid in the range of 1 : 2-5 : 3-10 is used in process step (c).

7. Process according to any one of the preceding claims,
whereby the iridium fines are a mixture of inorganic solid particles that contains metallic iridium and/or iridium oxide at a total iridium content of the mixture of 20 to 99% by weight.

8. Process according to any one of the claims 1 to 7,
whereby the iridium fines is a mixture of solid particles that consists of
(A) 0 to 99% by weight metallic iridium;
(B) 0 to 20% by weight of at least one elemental metal different from iridium, selected from the group of metals of atomic numbers 13, 21-30, 39-50, 72-76, and 78-82;
(C) 0 to 99% by weight iridium oxide;
(D) 0 to 70% by weight of at least one metal oxide different from iridium oxide;
(E) 0 to 30% by weight of at least one inorganic substance different from (A) to (D); and
(F) 0 to 1 % by weight organic substance,
whereby the sum of the weight fractions in % by weight of components (A) to (F) adds up to 100% by weight and the total iridium content of the iridium fines is 20 to 99% by weight.

9. Process according to claim 8,
whereby the at least one metal oxide of component (D) is selected from the group consisting of oxides of the metals of component (B), alkali metal oxides and/or alkaline earth metal oxides.

10. Process according to claim 8 or 9,
whereby the at least one inorganic substance of component (E) comprises neither (i) substances reacting acidic, nor (ii) substances that can be oxidised by means of sodium peroxide or sodium nitrate while producing fire or even an explosion.

11. Process according to claim 8, 9 or 10,
whereby the at least one inorganic substance of component (E) is selected from the group consisting of (i) solid non-metal oxides, (ii) simple or complex salts, (iii) oxo, sulfur and/or phosphorus compounds of one or more metals of atomic numbers 13, 21-30, 39-50, 72-82 different from oxides, simple salts, and complex salts of component (ii), and (iv) carbon.

12. Process according to any one of the claims 7 to 11,
whereby the absolute grain sizes of the solid particles of the iridium fines are in the range of 50 to 200 µm.

## Revendications

1. Procédé de désagrégation de fines d'iridium, comprenant les étapes :
(a) désagréger par oxydation alcaline 1 partie en poids de fines d'iridium avec 3 à 20 parties en poids d'une combinaison comprenant 40 à 70 parties en poids d'hydroxyde de sodium, 15 à 30 parties en poids de nitrate de sodium et 10 à 40 parties en poids de peroxyde de sodium dans la masse fondue, dans lequel la somme des parties en poids se monte à 100 parties en poids,
(b) refroidir la matière de désagrégation formée à l'étape (a) à 20 à 70°C,
(c) dissoudre les parties solubles dans de l'acide de la matière de désagrégation refroidie dans de l'hydracide d'eau/halogène jusqu'à l'obtention d'une solution aqueuse acide avec une valeur de pH dans la région de -1 à +1, et
(d) concentrer la solution aqueuse acide obtenue à l'étape (c) jusqu'à la fin de la formation de gaz nitreux,
dans lequel une étape (e) de séparation de constituants insolubles de la solution aqueuse acide peut avoir lieu avant ou après l'étape (d) si nécessaire.

2. Procédé selon la revendication 1,
dans lequel la combinaison comprend 45 à 60 parties en poids d'hydroxyde de sodium, 15 à 25 parties en poids de nitrate de sodium et 15 à 25 parties en poids de peroxyde de sodium.

3. Procédé selon la revendication 1 ou 2,
dans lequel la combinaison ne comprend aucune autre substance outre de l'hydroxyde de sodium, du nitrate de sodium et du peroxyde de sodium.

4. Procédé selon une des revendications précédentes,
dans lequel de l'hydroxyde de sodium est fourni et le peroxyde de sodium est ajouté après addition des fines d'iridium.

5. Procédé selon une des revendications précédentes,
dans lequel la masse fondue ainsi obtenue est amenée à une température dans la région de 600 à 660°C et y est maintenue pendant 2 à 5 heures après addition complète de tous les composants.

6. Procédé selon une des revendications précédentes,
dans lequel un rapport pondéral appliqué pendant l'étape de procédé (c) entre matière de désagrégation / eau / 8N- à 12N-hydracide d'halogène se situe dans la région de 1 / 2 à 5 / 3 à 10.

7. Procédé selon une des revendications précédentes,
dans lequel les fines d'iridium sont un mélange de particules solides inorganiques qui contient de l'iridium métallique et/ou de l'oxyde d'iridium à une proportion d'iridium totale de 20 à 99 % en poids dans le mélange.

8. Procédé selon une des revendications 1 à 7,
dans lequel les fines d'iridium sont un mélange de particules solides qui se compose de
(A) 0 à 99 % en poids d'iridium métallique,
(B) 0 à 20 % en poids d'au moins un métal différent de l'iridium, présent de manière élémentaire, sélectionné parmi le groupe des métaux des numéros d'ordre 13, 21 à 30, 39 à 50, 72 à 76 et 78 à 82,
(C) 0 à 99 % en poids d'oxyde d'iridium,
(D) 0 à 70 % en poids d'au moins un oxyde métallique différent de l'oxyde d'iridium,
(E) 0 à 30 % en poids d'au moins une substance inorganique différente de (A) à (D), et
(F) 0 à 1 % en poids de substance organique,
dans lequel la somme des % en poids des composants (A) à (F) se monte à 100 % en poids et la teneur en iridium totale des fines d'iridium se monte à 20 à 99 % en poids.

9. Procédé selon la revendication 8,
dans lequel l'au moins un oxyde métallique du composant (D) est sélectionné parmi le groupe composé d'oxydes des métaux du composant (A), d'oxydes de métal alcalin et d'oxydes de métal alcalino-terreux.

10. Procédé selon la revendication 8 ou 9,
dans lequel l'au moins une substance inorganique du composant (E) ne comprend ni (i) substances à réaction acide, ni (ii) substances oxydables au moyen de peroxyde de sodium ou nitrate de sodium avec apparition de feu, voire même explosion.

11. Procédé selon la revendication 8, 9 ou 10,
dans lequel l'au moins une substance inorganique du composant (E) est sélectionnée parmi le groupe composé de (i) oxydes non métalliques solides, (ii) sels simples ou complexes, (iii) composés oxo, de soufre et/ou de phosphore différents d'oxydes, de sels simples et de sels complexes du composant (ii) d'un ou plusieurs métaux des numéros d'ordre 13, 21 à 30, 39 à 50, 72 à 82 et (iv) du carbone.

12. Procédé selon une des revendications 7 à 11,
dans lequel les granulométries absolues des particules solides des fines d'iridium se situent dans la région de 50 à 200 µm.
